# EUROPÄISCHE PATENTSCHRIFT

(11) **EP 0 428 563 B1**
(45) Veröffentlichungstag und Bekanntmachung des Hinweises auf die Patenterteilung: **01.05.1996**
(21) Anmeldenummer: 89908690.4
(22) Anmeldetag: 01.08.1989
(51) Int. Cl.: E04B 2/02, E04C 1/39, A01G 9/02

(54) **BAUSATZ AUS INEINANDERSTECKBAREN WINKELELEMENTEN**
SET OF ANGULAR BUILDING ELEMENTS FITTING INTO ONE ANOTHER
ENSEMBLE D'ELEMENTS DE CONSTRUCTION EN COIN EMBOITABLES

(30) Priorität: 02.08.1988 DE 8809862 U
(43) Veröffentlichungstag der Anmeldung: 29.05.1991
(73) Patentinhaber: Bökeler, Hans-Jörg, D-71277 Rutesheim (DE)
(72) Erfinder: Bökeler, Hans-Jörg, D-71277 Rutesheim (DE)
(86) Internationale Anmeldenummer: DE8900505
(87) Internationale Veröffentlichungsnummer: WO9001597

(56) Entgegenhaltungen:
- DE-A- 2 737 322
- DE-A- 3 233 014
- DE-A- 3 420 037
- US-A- 3 444 694
- US-A- 4 798 499

## Beschreibung

### Stand der Technik:

Die Erfindung betrifft einen Bausatz aus ineinandersteckbaren Winkelelementen zur Erstellung von bepflanzbaren Sicht- und Schallschutzmauern, Hangabstützungen und Stützen sowie Grundstücks- Weg- und Beeteinfassungen, Fertigteilgebäuden und Spielwaren nach den im Oberbegriff des Patentanspruchs 1 genannten, gattungsbestimmenden Merkmalen.

Ein derartiger Bausatz ist durch die **DE-A 2 737 322** bekannt.
Die Schenkel der Winkelelemente des bekannten Bausatzes haben flach gekrümmte Sichtflächen, d.h. einen bikonkaven - horizontalen - Querschnitt.

Dies hat zur Folge, daß Winkelelemente, die in dichtestmöglicher Anordnung auf z.B. einer Palette gestapelt sind, entlang vertikaler Kanten mit Sichtflächen der jeweils benachbart angeordneten Winkelelemente in Berührung stehen was beim Transport häufig zu Beschädigungen der Kanten dieser Winkelelemente führt oder aber zu aufwendigen Schutzmaßnahmen für den Transport zwingt. Außerdem verhindern die nicht parallelen Schenkelränder ein platzsparendes Ineinanderstapeln auf engstem Raum.

Als nachteilig für den bekannten Bausatz muß auch angesehen werden, daß sich die vertikalen Kanten des Schenkelrückens beim Ineinanderstapeln gegen die konkaven Innenflächen eindrücken und bei Horizontaldruck in Richtung parallel zur Symmetrieebene, wie dies beim seitlichen Greifen in Produktion und Transport notwendig ist, (z.B. bei Gabelstaplern mit Seitengreifern) würde der Schenkelrücken keilförmig die Schenkel des anliegenden Winkelsteines spreizen und zu dessen Bruch führen. Eine Bruchgefahr erwächst besonders aus der ca 90°-Innenecke am Berührungspunkt der beiden Schenkel.

Die Schenkelspitzen des bekannten Bausatzes sind nicht notwendigerweise symmetrisch zur Schenkelmittelachse und die äußeren Schenkelränder nicht zur Schenkelhalbierenden, was zu einer Beschränkung der möglichen Verwendungsarten führt.

Weiterhin ist unter **US-A-3 444 694** eine Methode bekannt, aus dreieckigen, zweischenkligen Winkelelementen Böschungen für verschiedene Innen- und Außenradien zu errichten. Die bekannten Winkelelemente haben Innenwinkel von 60-150 Grad, gleiche, oder unterschiedliche Schenkellängen, was einem wirtschaftlichem Ineinanderstapel entgegensteht. Für Böschungsbauwerke sind viele unterschiedliche Teile notwendig. d.h. die Menge gleicher Elemente ist gering, was einer wirtschaftlichen Fertigung und Logistik abträglich ist. Die Schenkelspitzen der bekannten Winkelelemente sind nicht symmetrisch, somit nicht geeignet für senkrechte Wände und Stützen d.h. sie können nicht im Verband versetzt werden. Deshalb können keine senkrechten Nischen gebildet werden, die mit Erde zu füllen und mit Etagenplatten zu übereinanderliegenden Pflanzterrassen auszubilden und zu begrünen wären.

Allgemein verbreitet sind weiter Betonformsteine von winkelförmigem Grundriß, die im Handel unter der Bezeichnung "**L-Steine**" oder Winkelsteine bekannt sind. Diese L-Steine haben parallele Querränder, bzw. Deck- und Bodenflächen, einen rechtwinklig, gleichschenkligen Grundriß mit je ca 40 cm Schenkellänge, eine Höhe von ca 40 cm, eine Materialdicke von ca 6 bis 10 cm und ein Gewicht von ca 51 kg. Ihre Schenkelenden verlaufen stumpfwinklig unter 90 Grad zu den Schenkelkanten. Sie haben glatte Außenflächen und dienen vor allem Landschaftsgärtnern und Selbstbauern zur Gestaltung und Einfassung von Hochbeeten, Sandkästen, Terrassen und ähnliches.

Nachteilig an dem bekannten L-Stein sind vor allem seine stumfpwinklige Ausbildung der Schenkelenden, die den L-Stein für das Aneinanderfügen mit parallelen Stoßflächen in Längs- und Querrichtung und für ein Vermauern im Verband ungeeignet macht. Dadurch sind seine Anwendungsmöglichkeiten beschränkt und lassen einen Einsatz meist nur in liegender Lage, das heißt mit einem Querrand parallel zum Boden zu. Sein relativ hohes Gewicht von 51 kg und seine konstruktiv und gestalterisch wenig befriedigende Formgebung aus glattem, nicht strukturiertem Beton schränken seine Verwendungsmöglichkeiten weiter ein. Die bekannten L-Steine können an ihren Stoßfugen nicht miteinander verdübelt oder verzahnt werden. Sie sitzen nur durch Schwerkraft und materialbedingte Reibung gehalten mit senkrecht übereinanderstehenden Stoßfugen aufeinander bzw. nebeneinander.

Ein Verbauen mit versetzten Stoßfugen oder ein Ausbilden von Stützen und Pfeilern ist nicht möglich. Auch können keine senkrechten Erdsäulen und etagenweise Pflanztaschen ausgebildet werden.

### Zielsetzung

Ausgehend von einem Bausatz der eingangs genannten Art liegt der Erfindung die Aufgabe zugrunde, Winkelelemente derartig zu gestalten, daß die Formgebung statisch optimiert und den wirtschaftlichen Notwendigkeiten bei Produktion, Transport und Lagerung angepaßt wird, insbesonders eine gute und schonende Stapelbarkeit derselben erlaubt, und von einer Person von Hand nach Maurermethode versetzbar ist, bei gleichzeitig gestalterisch ansprechender und ökologisch sinnvoller Verwendung zum Aufbau von Wänden, Schallschutzmauern und dergleichen, wobei deren Sichtseiten auf einfache Weise begrünt werden sollen.

### Lösung:

Diese Aufgabe wird durch die im kennzeichnenden Teil des Patentanspruchs 1 genannten Merkmale der Erfindung gelöst.

Die Winkelelemente des erfindungsgemäßen Bausatzes können universell zum Bau von senkrechten und geböschten Wänden verbaut werden und von einer Person im Verband, d.h. mit versetzten Stoßfugen, vermauert werden. Dank der Parallelität der inneren 17 und äußeren Schenkelränder 18 sind die Winkelelemente auf engstem Raum stapelfähig. Die zum Schenkelrücken 14 parallele Innenkehle 16 mit zwei 45°-Innenecken (an Stelle nur einer bruchgefährdeten 90°-Innenecke wie bei DE-A 2 737 322) verstärkt den Bereich in Steinmitte, was zu einer Verbesserung der Statik des einzelnen Winkelsteins sowie einer besseren Stabilität von Anwendungsbauwerken führt.

Die erfindungsgemäße Stapelfähigkeit führt zu Gewichts-, Platz- und damit zu Kostenvorteilen bei Produktion, Lagerhaltung, Transport und Montage. Wegen des geringen Platzbedarfs können genormte Mehrweg-Paletten (z.B. Euro-Paletten) verwendet werden. Damit wird ein Beitrag zum Umweltschutz durch Müllvermeidung geleistet. Außerdem hilft die gute Stapelfähigkeit, Transportfahrzeuge besser auszulasten, Lieferradien zu erhöhen, Einzugsgebiete und Märkte einzelner Hersteller zu vergrößern, damit Produktionskapazitäten besser zu nutzen und Stückkosten zu senken.

Die Winkelsteine sind am Stoß so ausgeformt, daß sich gleiche Steine aneinanderstoßend im Verband zu senkrechten und/oder geböschten Pflanzwänden versetzen und endlos verlängern lassen, wobei die durch dreieckige Rücksprünge gebildeten Nischen mit Hilfe von Etagenplatten zu terrassenförmigen Pflanzentaschen ausgeformt und zu senkrechten Erdsäulen durchgehend verfüllt und mit dem Erdreich verbunden und verwurzelt werden können.
Im Verband mit versetzten Stoßfugen und verdübelten Horizontalfugen können die Winkelsteine zu senkrechten Wänden und Stützen von großer Standfestigkeit und Steifigkeit auch trocken. d.h. ohne Mörtel vermauert werden. Die senkrechten Wandflächen sind begrünbar und ökologisch nutzbar. Eine gute Schallabsorption wird durch die Schrägstellung der Zick-Zack-Wände und deren rauhe Oberfläche erreicht und durch die Erdfüllung der Nischen und deren Bepflanzung weiter erhöht.

Die Winkelsteine können sowohl zu statisch tragfähigen, als auch zu formschönen Pflanzwänden, -säulen, Böschungsmauern und Pfeilern versetzt werden. Die Statik kann zusätzlich verbessert werden, indem aus den Winkelelementen Hohlkammern geformt werden, die mit Armierung und Beton verfüllt und zu Stahlbetonstützen und Stützwänden ausgebildet werden können Den Planern und Ausführenden im Garten- und Landschaftsbau werden viele neue Gestaltungsmöglichkeiten angeboten. Die einzelnen Steine sind von günstig geringem Gewicht, d.h. so handlich und leicht, daß sie von einer Person bei zumutbarer körperlicher Belastung versetzt werden können.
Die Winkelsteine 1, 2 und 61 bieten mit ihrer breit ausladenden, abgewinkelten Grundform die Basis für einen kippsicheren Stand. Die Winkelform besitzt ein gunstiges Trägheitsmoment. wobei der Schwerpunkt innerhalb der Dreiecksform liegt, aber außerhalb der Querschnittsfläche.

Gegenüber dem 90-Grad Winkelstein 1 hat der 60-Grad-Winkelstein 61 einige zusätzliche Vorteile: Er hat eine gleichseitige, noch größere Grundfläche, dadurch auch ein größeres Trägheitsmoment, höhere Knickfestigkeit und ein besseres Fassungsvermögen für Erde. Aus ihm lassen sich sechseckige. sternförmige Pflanzsäulen, freistehend und/oder an jeder Seite erweiterbar bilden. Auch freistehende, dreieckige Pflanzsäulen sind möglich.

### Beschreibung der Figuren

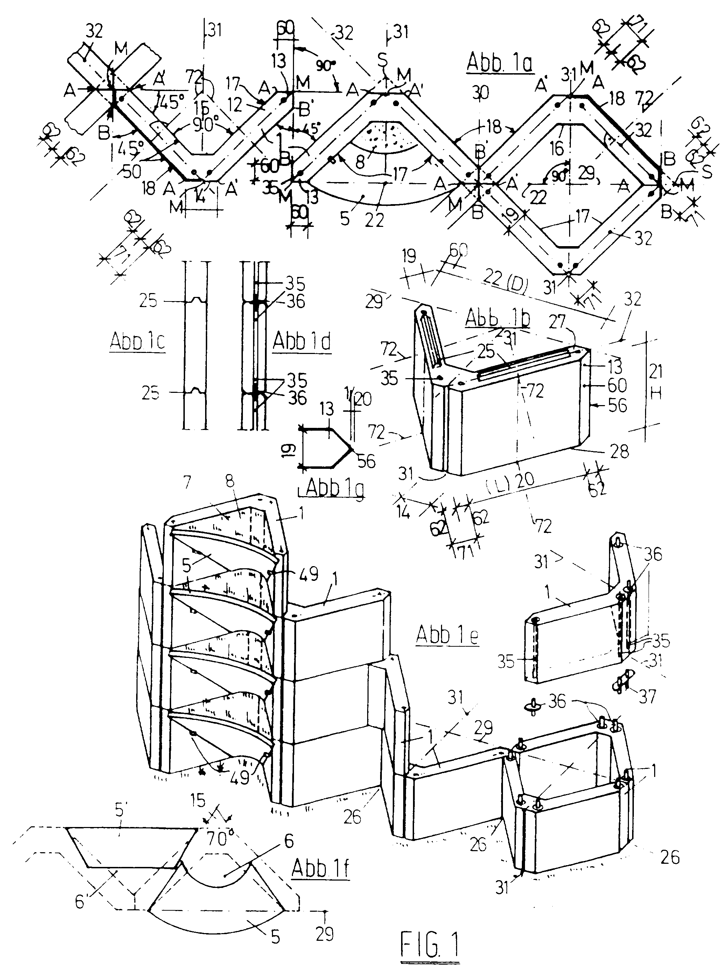

**Fig.1 : Abb.1a** zeigt 90-Grad-Winkelsteine 1 nach Anspruch 1 und 2 im Grundriß. die jeweils mit ihren Diagonalen 22, ihren Steinrücken 14 und einer zugehörigen Seite 60 der Schenkelspitzen 13 parallel zur Längsmittelebene 29 verlaufen. Die Projektion der Schenkelrücken 14 auf die Schenkelmittelachse 32 ergibt eine Länge 71, die doppelt so lang ist wie die Projektion 62 einer Schenkelspitze 13 auf die Ebene 32.
Die zwei Winkelsteine mit nach unten weisenden Schenkelspitzen 13 haben einen gemeinsamen Längsstoß M-B in Mauerquermittelebene 30. Diese Stoßfuge M-B wird in einer zweiten. daraufzusetzenden Lage von dem linken Winkelstein überbrückt Der um 90 Grad verdrehte,

linke Stein weist mit seinen Schenkelspitzen 13 nach oben und überdeckt somit die beiden darunterliegenden Winkelsteine von Steinmitte 31 bis Steinmitte 31.

Vier, mit ihren Schenkelspitzen 13 im Mittelpunkt M sich berührende Winkelsteine 1 bilden ein gemeinsames Quadrat A-B-A'-B. dessen Kantenlänge der Schenkeldicke 19 entspricht. Die Diagonalen A-A' und B-B' des Quadrats entsprechen der Länge des Steinrückens 14, und die Hälfte der Diagonalseite A-A' bzw. B-B' entspricht einer Dreiecksseite 60 der gleichschenkligrechtwinkligen Schenkelspitzen 13.

An den rechten, obersten Winkelstein 1 ist von unten ein zweiter Winkelstein 1 mit den Berührungsflächen A-M und A'-M angefügt. Als Paar bilden die beiden Winkelsteine 1 einen geschlossenen, etwa quadratischen Hohlkörper für Pflanzgefäße und Hohlstützen. Die folgende Schicht wird durch ein weiteres um 90 Grad gedrehtes Winkelstein-Paar gebildet, deren Stoßfugen A-M über den Steinmitten 31 des unteren Steinpaars sitzen.

**Fig1, Abb.1b** zeigt den Winkelstein 1 in Perspektive mit einer Schenkellänge 20 (L) = 36.5 cm, einer Höhe 21 (H) = 25 cm, einer Dicke 19 (d) = 6,5 cm und einer Diagonalen 22 (D) = 51 cm. Auf den Schenkelmittelachsen 32 der oberen und unteren Querschnittsflächen befinden sich vier runde Dübellöcher von nach oben sich konisch erweiterndem Durchmesser von ca 10 mm und ca 35 mm Tiefe. Außerdem sind die oberen Querschnittsflächen 27 mit Erhebungen von trapezförmigem Profil parallel zur Schenkelmittelachse 32 von ca 2 cm Höhe ausgestattet, und die unteren Querschnittsflächen 28 mit dazu komplementär gestalteten nutförmigen Vertiefungen versehen.

**Fig.1, Abb.1c** zeigt den Querschnitt I-I durch den Winkelstein 1 der Abb.1b mit im Querschnitt trapezförmigen Nut- und Feder-Lagerfugen 25 als eine von mehreren Verzahnungsarten.

**Fig.1, Abb.1d** zeigt den Querschnitt II-II durch den Winkelstein 1 der Abb. 1b mit Dübellöchern 35 und stabförmigen Dübeln 36 in den Lagerfugen als eine von mehreren Verzahnungsarten.

**Fig.1, Abb.1e** zeigt die Perspektive eines typischen Wandstücks aus Winkelsteinen 1, das in einem Mauerverband mit versetzten Stoßfugen erstellt ist. Eine der dreiecksförmigen Nischen wird zur offenen Seite hin mit schräg eingesetzten Etagenplatten 5 abgeschottet. die im rückwärtigen Eckbereich eine senkrechte Erdsäule 8 umschließen und etagenweise Pflanzterrassen bilden.

Die rechts dargestellte geschlossene Hohlform wird aus zwei sich mit den Innenseiten der Schenkelspitzen 13 berührenden Winkelsteinen gebildet. Die Steine der nächst folgenden Schicht sind jeweils um 90 Grad gedreht, sodaß jeweils eine Steinmitte 31 die darunterliegende Stoßfuge 26 überbrückt. Die geschlossenen Hohlformen können hohl belassen, mit Erde befüllt, oder an beliebiger Stelle zur Aussteifung der Wand zu Stahlbetonstützen vergossen werden.

Zur Verdübelung der Horizontalfugen 27 werden Stabdübel 36 mit oder ohne Verbindungslasche 37 in die dazu komplementär gestalteten Rundlöcher 35 der übereinandergestellten Steine gesteckt. wobei jeweils vier Dübellöcher eines Schenkels mit den vier Dübellöchern der dazu parallelen Schenkel zweier darüberliegenden und/der darunterliegenden Winkelsteine zueinander ausgerichtet werden. Zusätzlich und/oder alternativ zu der Stabverdübelung 36 und 37 kann die Horizontalverdübelung mit Hilfe der Nut-und-Feder-Verzahnung 25 nach Abb.1c erfolgen.

**Fig.1, Abb.1f** zeigt den Querschnitt von zwei etwa kuchenstückförmigen Etagenplatten 5 und 5' mit einem spitzen Winkel 15 von ca 70 Grad, (passend zu den 90 Grad-Winkelsteinen 1 ) der durch die spitz zulaufenden Außenränder begrenzt ist. Die Etagenplatte 5 und 5' wird in einer parallel zu 29 verlaufenden Längsachse mit leicht nach vorn tendierender Lastverteilung von zwei seitlich an die Winkelsteinwandung angeformten oder angedübelten Auflagerpunkten 49 unterstützt, vom Eigengewicht und der Erdauflast nach vorne gedrückt und in einer nach hinten geneigten Schräglage fixiert. Ein Kippen nach vorne wird dadurch verhindert. daß die äußeren Kanten der E;agenplatte im rückwärtigen Bereich nach oben gedrückt und sich an den Wandungen der Winkelplatten verkeilen.

Die an der Spitze der Etagenplatte vorhandene. segmentartige Ausnehmung 6 und 6' begrenzt etwa einen Hohlraum als Viertelkreis von ca 17 cm Radius. der mit Erde angefüllt werden kann. und als durchgehende, senkrechte Erdsäule die einzelnen Pflanzetagen untereinander bis hinunter zum gewachsenen Erdreich verbindet. Die Wurzeln können in dem Erdkern 8 nach unten bis in Erdreich hineinwachsen und die Kapillarwirkung bewirkt ein Aufsteigen der Feuchtigkeit nach oben zu den einzelnen Pflanzetagen. Links daneben ist die trapezförmige Etagenplatte 5' mit geraden Kanten und gerade abgeschnittener Ecke 6' dargestellt. Diese Alternative ist bestimmt für Fälle. in denen die Vorderkante nicht über die Längsmittelebene 29 hinausragen soll.

**Fig.1, Abb.1g** zeigt den Grundriß einer Schenkelspitze 13 mit Abfasung 56. die vorgesehen ist, um ein Brechen der Kante zu verhindern. Die Höhe des abgefasten Dreiecks beträgt ca 1/20 der Schenkeldicke 19.

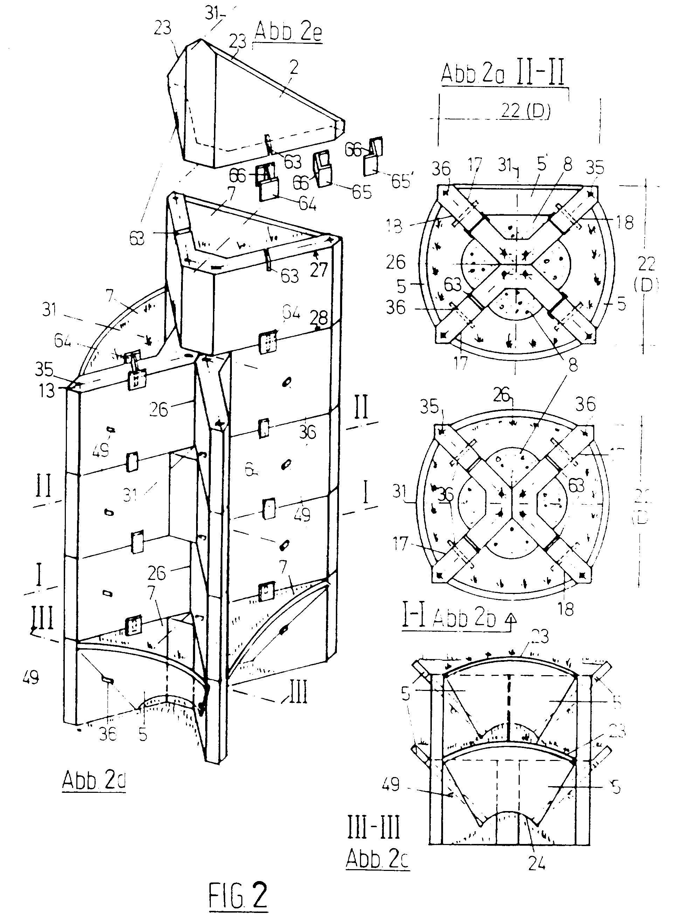

**Fig.2, Abb.2a** zeigt den kreuzförmigen Grundriß II-II eines Pflanzturms aus paarweise am Rücken 14 gestoßenen Winkelsteinen 1 mit einer Stoßfuge 26 in Ost-West-Richtung. Zwei der vier rechtwinkligen Kammern werden von den inneren Schenkelrändern 17 gebildet und zwei Kammern von den äußeren Schenkelrändern 18, das heißt von den 90-Grad-Zwischenräumen. Die Kammern können senkrecht mit Erde verfüllt werden, indem schräg eingesetzte Etagenplatten 5 und 5' die Öffnungen terrassenförmig abschotten, und den Erdkern 8 im Eck der Kammern zurückhalten.

**Fig.2, Abb.2b** zeigt die folgende Schicht des kreuzförmigen Grundrisses I-I der Abb.2a, jedoch sind die paarweise sich berührenden Winkelsteine um 90 Grad verdreht. sodaß ihre gemeinsame Stoßfuge 26 nunmehr in Nord-Süd-Richtung verläuft. Die 90 Grad-Drehung in jeder Schicht bewirkt, daß jede Stoßfuge 26 in der nächstfolgenden Schicht von zwei Winkelsteinen in Steinmitte 31 überbrückt wird.

Mit dieser stabilen Versetzweise nach dem Mauerverband kann eine mehrschichtige Kreuzsäule wie ein homogenes kreuzförmiges Profil belastet und berechnet werden. Zusätzlichen Verbund zwischen den Schichten erreicht man durch eine Verdübelung mit H- 64, U- 65 oder Z-Profilstücken 65', die in Schenkelmitte in dazu passende nutförmige Aussparungen quer zur Schenkelmittelachse eingepaßt werden und damit die übereinanderliegenden Schenkel zueinander ausrichten. In diesem Fall kann auf die alternative Verwendung der verdeckt einsetzbaren Stabdübel 36 verzichtet werden.

Für die alternative Verdübelung der Horizontalfugen sind vier Dübellöcher 35 bzw. 91 pro Stein vorgesehen. Sie passen mit den zwei mal zwei Löchern 35 der darunterliegenden und darüberliegenden Schenkelpaare überein, sodaß Schichten mit acht Stabdübeln 36 verbunden werden können. Zur Vereinfachung der Montage können auch Doppelstabdübel mit Lasche 37 die Stoßfugen 26 überbrücken.

**Fig.2, Abb.2c** zeigt die Ansicht III-III von zwei Schichten kreuzförmig im Verband versetzter Winkelsteine 1 mit eingebauten und angefüllten Etagenplatten 5 Die bepflanzbaren Terrassen 7 erstrecken sich in ihrer schrägen Oberfläche jeweils vom äußeren oberen Querrand 23 der unteren bis zum unteren Querrand 24 der oberen Etagenplatte 5.

**Fig.2, Abb.2d** zeigt die Perspektive des kreuzförmigen Pflanzturms mit Pflanzetagen in der untersten und obersten Schicht. Die Schichten 2-4 zeigen die jeweils um 90 Grad verdrehten Steinschichten, wobei jeweils eine Stoßfuge 26 von einer Steinmitte 31 überbrückt wird. Als Auflager 49 für die Etagenplatten 5 und 5' dienen die horizontalen Stabdübel 36 die seitlich in Dübellöchern 35 der Steinwandungen eingelassen sind.

Als oberster Abschluß und optischer Akzent wird in Abb.2e ein Winkelstein 3 mit spitziger oberer Querkante auf die normalen Winkelsteine daraufgesetzt.

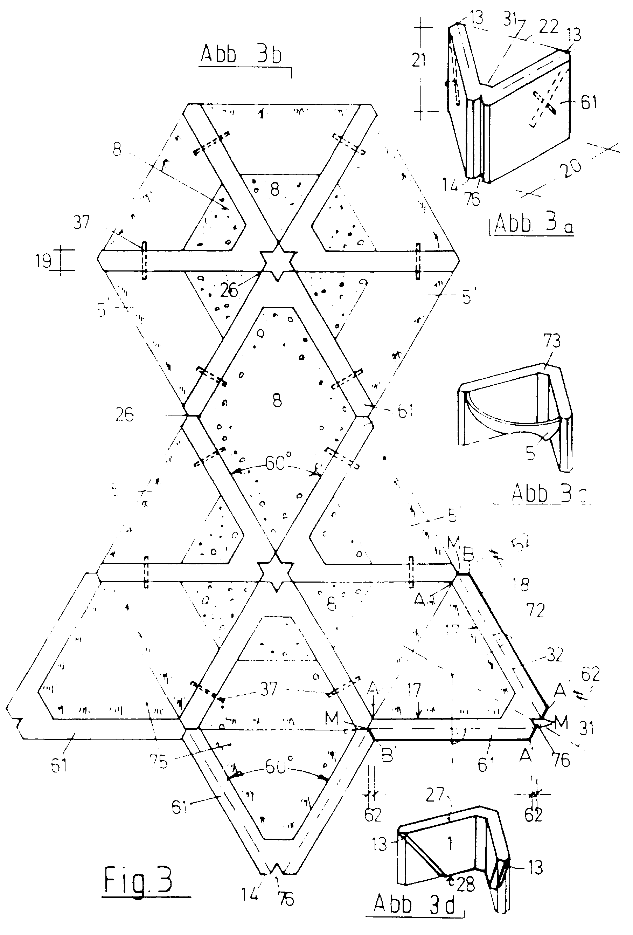

**Fig.3, Abb.3a** zeigt die Perspektive eines 60-Grad-Steins 61 mit einer Schenkellänge 20 von 45 cm. einer Höhe 21 von 25 cm, einer Diagonalen 22 von 55 cm und einer Dicke 19 von 7 cm.

**Fig.3, Abb.3b** zeigt den Grundriß von zwei, in Blattmitte gestoßenen, sechseckigen Pflanzsäulen die aus jeweils drei, "auf Lücke", versetzten 60-Grad-Steinen 61 bestehen. Die 60-Grad-Zwischenräume und Stoßfugen 26 zwischen den Winkelsteinen 61 werden in der nächsten Schicht mit den Steinmitten 31 überbrückt, sodaß ein VerDund nach dem Prinzip versetzter Stoßfugen entsteht.

Die offenen Seiten der einzelnen Kammern sind durch Etagenplatten 5' zu Pflanzterrassen ausgebildet. welche den Erdkern 8 im Eck der Nische zurückhalten. Die drei an die Öffnungen angebauten Winkelsteine am unteren Blattrand sind nur eine Schicht hoch und dienen als vorgelagerte Pflanzbeete 75. Die Schenkelränder 18 außerhalb der Schenkelmittelachse 32 sind zur Schenkelhalbierenden 72 symmetrisch, so daß die Projektion 62 an Schenkelspitze B-M'und Schenkelrücken A-M auf die Ebene der Schenkelmittelachse 32 gleich breit ist. Der Schenkelrücken 14 kann sowohl mit glatter Fläche als auch mit einer Kerbe 76 ausgestattet sein, deren Ränder parallel zu den inneren Schenkelrändern 17 verlaufen.

**Fig.3, Abb.3c** zeigt die Perspektive eines homogenen Winkelsteinbehälters 73 bei dem die Etagenplatte 5 angeformt ist. Die größere Festigkeit und Steifigkeit einer solchen geschlossenen Form gegenüber dem offenen Winkelstein erlaubt eine gewisse Materialeinsparung. Allerdings kann die Form nicht ineinander gestapelt werden.

**Fig.3, Abb.3d** zeigt die Perspektive eines Winkelsteins 1 dessen Schenkelspitzen 13 zwischen oberem 27, und unterem Querrand 28, schräg verlaufen, sodaß die Schenkel des unteren Querrands 28, kürzer als am oberen Querrand 27 sind.

## Patentansprüche

1. Bausatz aus ineinandersteckbaren Winkelelementen zur Erstellung von freistehenden Pflanzwänden und -säulen, Sicht-und Schallschutzmauern, einseitig anzuschüttenden Böschungsbefestigungen, Grundstücks-, Weg- und Beeteinfassungen, zur Erstellung von Gebäuden in Fertigteilbauweise, für Möbelstücke, Raumteiler und Modellbauwerke, vorwiegend aus Beton, aber auch aus anderen Materialien wie Polyesterbeton, Keramik, Kunststoff, Holz und Metall mit symmetrisch zur Quermittelebene (31) der Winkelelemente (1, 2, 3, 61, 68, 68', 69, 70, 77, 80, 98) gestalteten, über einen Schenkelrücken (14) miteinander verbundenen, mit einem Winkel zwischen 60 und 90 Grad zueinander verlaufenden Schenkeln, die gleichschenklige Schenkelspitzen (13) haben, wobei die Schenkelaußenränder (18; M-A-B-M) symmetrisch zur jeweils zugehörigen Schenkelhalbierenden (72) geformt sind und die Projektionen (62) von Schenkelspitze (M-B) und halbem Schenkelrücken (M-A) auf die Ebene der Schenkelmittelachse (32) gleich lang sind, **dadurch gekennzeichnet,**
**daß** die beidseits der Schenkelmittelachse verlaufenden Schenkelinnenränder (17) und Schenkelaußenränder (18) der Schenkel (12) als im wesentlichen ebene, parallel zueinander verlaufende Flächen ausgebildet sind,
**daß** eine Innenkehle (16) als parallel zum Schenkelrücken (14; A-M-A') geformte Fläche ausgebildet ist, deren Breite (16) größer ist als die halbe Breite eines Schenkelrückens (14) und deren Abstand (53) zum Schenkelrücken größer ist als die Schenkeldicke (19) und
**daß** an die Winkelsteine ansetzbare ring-sektorförmige bzw. trapezförmige Etagenplatten (5) und 5') vorgesehen sind, deren spitzwinklig zueinander verlaufende Außenränder einen Winkel begrenzen, der 10 bis 30 Grad kleiner ist als der Innenwinkel (15) der Winkelelemente, mit deren Schenklen die Etagenplatten (5) und (5') bei Schrägstellung in formschlüssigen Eingriff bringbar sind und durch Unterstützung an zwei Auflagerpunkten (49) in stabiler Lage gehalten werden.

2. Bausatz nach Anspruch 1, **dadurch gekennzeichnet,** daß die rechtwinklig-gleichschenkligen Schenkelspitzen eine Seitenlänge (60) (A-M) haben, die der haiben Breite des Schenkelrückens (14) entspricht, wobei der Schenkelrücken (14) der Diagonalen eines Quadrats aus der Schenkeldicke (19) als Kantenlänge entspricht. und wobei Schenkelrücken (14), Diagonale (22) und die Innenränder der Schenkelspitzen (60) zueinander parallel sind.

3. Bausatz nach Anspruch 1, **dadurch gekennzeichnet**, daß an den oberen (27) und unteren (28) Querschnittsflächen der Winkelsteine (1, 2, 3, 61, 69, 70, 77, 80, 98) und Platten (9, 99) mindestens zwei Dübellöcher (35) pro Schenkel entlang ihrer Schenkelmittelachse (32) und symmetrisch zur Schenkelhalbierenden (72) ausgespart sind, wobei die Dübellöcher (35) als durchgehende Hohlröhren (35, 91), die zwischen den Querrandflächen (23, 24) verlaufen, ausgebildet sind und mittels komplementär gestalteter Stab-Zentrierdübel (36) miteinander in formschlüssigen Eingriff bringbar sind.

4. Bausatz nach Anspruch 1, **dadurch gekennzeichnet**, daß der von den Schenkelrändern begrenzte Innenwinkel (15) und derjenige der Schenkelspitzen (13) neunzig Grad beträgt.

## Claims

1. Set of angular building elements fitting into one another for making freestanding planting walls and columns, visual and noise barriers, unilaterally filled embankment reinforcements, property, path, and flower bed enclosures, for constructing prefabricated buildings, for articles of furniture, room dividers, and model structures, primarily of concrete, but also of other materials such as polyester concrete, ceramic, plastic, wood, and metal with legs formed symmetrically with respect to transverse central plane (31) and angle block elements (1, 2, 3, 61, 68, 68, 69, 70, 77, 80, 98), joined together by a leg back (14), and running at an angle between 60 and 90 degrees to one another, said legs having equal-sided leg tips (13) with leg outer edges (18, M-A-B-M) being made symmetrical with respect to corresponding leg bisectrices (72) and projections (62) of leg tips (M-B) and half the leg back (M-A) on the plane of leg central axis (32) being of equal length, **characterized in that**
leg inner edges (17) and leg outer edges (18) extending on both sides of the leg central axis of legs (12) are made as essentially flat surfaces running parallel to one another,
an inner groove (16) is shaped as a surface parallel to leg backs (14; A-M-A'), the width (16) of said surface being greater than half the width of a leg back (14) and its distance (53) from the leg back being greater than leg thickness (19), and
annular-sector-shaped or trapezoidal tier slabs (5 and 5') mountable on section blocks are provided, whose outer edges, coming together at acute angles, delimit an angle that is 10 to 30 degrees less than inner angle (15) of the angle element, with whose legs tier slabs (5) and (5') are bringable into engagement positively in the diagonal position, and are held in a stable position by supporting them on two supports (49).

2. Set according to Claim 1, **characterised in that** the leg tips, at right angles and with equal legs, have a side length (60) (A-M) that corresponds to half the width of leg back (14), with leg back (14) corresponding to the diagonal of a square from leg thickness (19) as the edge length and with leg back (14), diagonals (22) and the inner edges of leg tips (60) being parallel to one another.

3. Set according to Claim 1, **characterized in that** at the upper (27) and lower (28) cross sectional surfaces of angle blocks (1, 2, 3, 61, 69, 70, 77, 80, 98) and slabs (9, 99) at least two dowel holes (35) per leg are provided along leg central axis (32) and symmetrically with respect to leg bisectrix (72), with dowel holes (35) running as through hollow tubes (35, 91) that pass between transverse edge surfaces (23, 24) and are bringable into positive engagement with one another by means of matched centering rod dowels (36).

4. Set according to Claim 1, **characterized in that** inner angle (15) delimited by the leg edges and that of leg tips (13) are each ninety degrees.

## Revendications

1. Ensemble d'éléments de construction en coin emboîtables pour la réalisation de murs et de colonnes de végétalisation autostables, de murs de protection contre les regards indiscrets/de parement et de protection phonique, de soutènements de talus à remblai unilatéral, d'enceintes de terrains, de chemins et de parterres, pour la construction de bâtiments en éléments préfabriqués, pour éléments de meubles, cloisonnements et ouvrages de construction modèle, en majorité en béton mais également en d'autres matériaux tels que béton au polyester, céramique, matière plastique, bois et métal avec des côtés symétriques par rapport au plan médian transversal (31) des éléments de construction en coin (1, 2, 3, 61, 68, 68', 69, 70, 77, 80, 98), reliés entre eux par un dos du côté (14), et disposés l'un par rapport à l'autre avec un angle entre 60 et 90 degrés, disposant d'extrémités de côté isocèles (13), les arêtes extérieures des côtés (18; M-A-B-M) formées à chaque fois avec une symétrie par rapport à la bissectrice de côté (72) appartenante et les projections (62) de l'extrémité de côté (M-B) et de la moitié du dos de côté (M-A) sur le plan de l'axe médian du côté (32) ayant la même longueur, **caractérisé par le fait**
**que** les arêtes intérieures du côté (17) et les arêtes extérieures du côté (18) des côtés (12) de part et d'autre de l'axe médian sont des surfaces essentiellement planes et parallèles l'une par rapport à l'autre,
**qu'**une gorge intérieure (16) est créée en tant que surface parallèle par rapport au dos du côté (14; A-M-A') dont la largeur (16) est supérieure à la moitié de la largeur d'un dos de côté (14) et dont la distance (53) par rapport au dos du côté est supérieure à l'épaisseur du côté (19) et
**que** les plaques en étage (5) et (5') en forme de secteur annulaire ou trapézoïdale pouvant être posées sur les pierres en coin sont prévues dont les arêtes extérieures qui forment un angle aigu limitent un angle qui est de 10 à 30 degrés plus petit que l'angle intérieur (15) des éléments en coin avec les côtés desquels les plaques en étage (5) et (5'), en position inclinée, peuvent être crabotées et peuvent être maintenues en position stable par soutien en-dessous sur deux points d'appui (49).

2. Ensemble d'éléments de construction suivant la revendication 1, **caractérisé par le fait que** les extrémités des côtés isocèles à angle droit ont une longueur latérale (60) (A-M) qui correspond à la mi-largeur du dos du côté (14), le dos du côté (14) correspondant à la diagonale d'un carré de l'épaisseur de côté (19) en tant que longueur de l'arête, et le dos du côté (14), la diagonale (22) et les arêtes intérieures des extrémités de côté (60) étant parallèles les unes par rapport aux autres.

3. Ensemble d'éléments de construction selon la revendication 1, **caractérisé par le fait que** sur les surfaces de coupe transversale supérieures (27) et inférieures (28) des pierres en coin (1, 2, 3, 61, 69, 70, 77, 80, 98) et des plaques (9, 99), au moins deux trous à cheville (35) par côté, le long de leur axe médian du côté (32) et symétriquement par rapport à la bissectrice de côté (72) sont évidés, les trous à cheville (35) étant des tubes creux (35, 91) de part en part qui passent entre les surfaces d'arête transversales (23, 24), et qui peuvent être crabotés l'un à l'autre moyennant des chevilles de centrage en tige (36) complémentaires.

4. Ensemble d'éléments de construction selon la revendication 1, **caractérisé par le fait que** l'angle intérieur (15) limité par les arêtes du côté et celui des extrémités de côté (13) est de quatre vingt dix degrés.
